# EUROPEAN PATENT SPECIFICATION

(11) **EP 3 275 913 B1**
(45) Date of publication and mention of the grant of the patent: **10.11.2021**
(21) Application number: 16181797.8
(22) Date of filing: 28.07.2016
(51) Int. Cl.: C08G 59/50, C08G 59/56, C08G 59/68

(54) **HIGH PERFORMANCE EPOXY ADHESIVE COMPOSITIONS**
HOCHLEISTUNGS-EPOXY-KLEBSTOFFZUSAMMENSETZUNGEN
COMPOSITIONS ADHÉSIVES ÉPOXY HAUTE PERFORMANCE

(43) Date of publication of application: 31.01.2018
(73) Proprietor: 3M Innovative Properties Company, Saint Paul, MN 55133-3427 (US)
(72) Inventor: Elgimiabi, Sohaib, 40629 Düsseldorf (DE)
(74) Representative: Hettstedt, Stephan

(56) References cited:
- EP-A1- 2 223 966
- WO-A1-2016/137791

## Description

### Technical Field

The present disclosure relates generally to epoxy resin based curable compositions, more specifically to the field of epoxy resin based curable adhesive compositions. The compositions of the present disclosure are particularly suitable for use in structural bonding applications, in particular for adhesively bonding parts in manufacturing operations in aeronautic and aerospace industries. The present disclosure also relates to method of using such epoxy resin based curable compositions.

### Background

Structural adhesives are adhesive compositions that can bond materials with a mechanical strength comparable to mechanical fasteners. They may be used to replace or augment conventional joining techniques such as welding, brazing or mechanical fasteners, such as nuts and bolts, screws and rivets. In particular, in the transportation and construction industries, structural adhesives can present a lightweight support of or even an alternative to mechanical fasteners. Moreover, in aerospace applications epoxy based adhesives normally need to fulfill challenging requirements with regard to adhesive strength and mechanical properties at elevated temperatures, e.g. at temperatures as high as from 100 to 130 °C.

Epoxy resin based compositions have long been known for their good adhesive and mechanical properties and have been widely used as bonding agents in a variety of applications. Many of these compositions contain latent curatives (for example dicyandiamides, anhydrides or aromatic amines, such as for example diaminodiphenyl sulfone) and require high temperatures for curing the adhesive composition. Such adhesive systems are referred to as "one-component systems". Advantageously, one-component systems may be applied as films which simplifies the adjustment of bond thicknesses. On the other hand, said one-component system may exhibit a limited shelf-life when being stored at room temperature and often require the use of ovens or autoclaves during the curing procedure due to curing taking place at elevated temperatures. Other epoxy adhesive formulations with more reactive curing agents can be cured at lower temperatures. Such systems are referred to as "two-component systems", because at least the majority of the epoxy resins are kept separated from the curing agents to avoid premature cross-linking. The two parts are combined upon application of the adhesive to initiate the curing reaction. These two-component systems may avoid the problem of limited shelf-life and may further be cured at lower temperatures than the one-component systems, e.g. even at room temperature.In many applications of two-component epoxy adhesives, a fast curing time, even at room temperature, is desirable or even mandatory. At the same time, even for curing at room temperature, it is also highly desirable or even mandatory that the adhesive bonds obtained exhibit good mechanical and adhesive strength. In addition, in many typical applications such as in transportation, automotive, aeronautics and aerospace manufacturing industries, mechanical and adhesive strength are required even at elevated temperatures.

Examples of room-temperature curable structural adhesive compositions used for adhesive bonding operations in aeronautic and aerospace industries are described e.g. in EP 2 402 394, in EP 2 223 966 and in the intermediate, not pre-published WO 2016/137791.

In industrial manufacturing operations, in particular in the automotive, transportation, aeronautics and aerospace field, where parts bonded by structural adhesives are often exposed to elevated temperatures and still must exhibit a high degree of mechanical strength, expectations are high towards the adhesives. In particular, it is highly desirable that structural adhesive compositions cure quickly into adhesive bonds which exhibit a high degree of toughness such as commonly known high overlap peel strength and high overlap shear strength, even at elevated temperatures.

Without contesting the technical advantages associated with the adhesive compositions known in the art for bonding parts, there is still a strong need for rapid curing adhesive compositions suitable for use in structural bonding applications.

Other advantages of the structural adhesives and methods of the invention will be apparent from the following description.

### Summary

The present disclosure relates to a precursor composition for a curable adhesive, the precursor comprising:
a) a part (A) comprising:
   i. a first epoxy curing agent comprising at least one polyether amine and having an amine equivalent weight of at least 45 grams per mole of amine equivalents;
   ii. a second epoxy curing agent distinct from the first epoxy curing agent or a secondary curative;
   iii. from 1.5 to 13 wt.-% of a metal nitrate catalyst, based on the total weight of the part A;
   iv. optionally, a metal triflate catalyst;
   v. optionally, a core-shell polymer toughening agent;
   vi. optionally, a filler material; and
b) a part (B) comprising:
   i. a multifunctional first epoxy resin having at least three functional groups;
   ii. a second epoxy resin distinct from the first epoxy resin;
   iii. a core-shell polymer toughening agent
   iv. a filler material;
   v. optionally, an epoxy-based reactive diluent;
wherein the composition does not comprise norbornane diamine.

The present disclosure further relates to a method of bonding an article to a substrate, wherein the method comprises the step of:
a) providing a precursor composition for a curable adhesive as described above;
b) combining part (A) and part (B) so as to form a curable adhesive composition;
c) applying the curable adhesive composition to at least part of the surface of the article and/or to the substrate;
d) adhesively contacting the article to the substrate via the curable adhesive composition; and
e) allowing the curable adhesive composition to cure.

Furthermore, the present disclosure relates to the use of a precursor composition as described above for industrial applications, in particular for manufacturing and repairing operations in construction, automotive, aeronautics or aerospace industries.

### Detailed description

The present disclosure relates to a precursor composition for a curable adhesive, the precursor comprising:
a) a part (A) comprising:
   i. a first epoxy curing agent comprising at least one polyether amine and having an amine equivalent weight of at least 45 grams per mole of amine equivalents;
   ii. a second epoxy curing agent distinct from the first epoxy curing agent or a secondary curative;
   iii. from 1.5 to 13 wt.-*%* of a metal nitrate catalyst, based on the total weight of the part (A);
   iv. optionally, a metal triflate catalyst;
   v. optionally, a core-shell polymer toughening agent;
   vi. optionally, a filler material; and
b) a part (B) comprising:
   ii. a multifunctional first epoxy resin having at least three functional groups;
   iii. a second epoxy resin distinct from the first epoxy resin;
   iv. a core-shell polymer toughening agent
   v. a filler material;
   vi. optionally, an epoxy-based reactive diluent;
wherein the composition does not comprise norbornane diamine.

In the context of the present disclosure, it has surprisingly been found that a curable composition as described above provides fast curing at room temperature while providing excellent overall adhesive characteristics and strong adhesive bonds, which makes it outstandingly suitable for use in structural bonding applications.

It has in particular been found that this is due to the specific and unique combination of a part (A) comprising a first epoxy curing agent comprising at least one polyether amine and having an amine equivalent weight of at least 45 grams per mole of amine equivalents, a second epoxy curing agent distinct from the first epoxy curing agent or a secondary curative, a metal nitrate catalyst, optionally, a metal triflate catalyst, and a part (B) comprising a multifunctional first epoxy resin having at least three functional groups, a second epoxy resin distinct from the first epoxy resin, a core-shell polymer toughening agent, a filler material, optionally, an epoxy-based reactive diluent.

The curable adhesive compositions according to the disclosure may find particular use in structural bonding applications, in particular for adhesively bonding parts, in various industries such as construction, automotive, aeronautics or aerospace. The curable adhesive precursor compositions according to the disclosure are a more versatile alternative to conventional epoxy based compositions that are typically used for adhesively bonding parts in automotive, transportation, aeronautics and aerospace industries. They may provide a desirable combination of good shelf life, fast curing even at ambient temperature as well as high mechanical strength of the adhesive bonds obtained therefrom, even at elevated temperatures. In addition, because curable adhesive compositions according to the disclosure allow adhesively bonding small parts such as brackets without the need to use supporting fixtures in any situations, bonding operations using such compositions are believed to be more cost-effective and less complex. In the context of industrial production, such as in construction, automotive, aeronautics or aerospace industries, the curable adhesive compositions of the present disclosure allows obtaining increased production rate and faster bonding operations.

In the context of the present disclosure still, the term "room temperature" refers to a temperature of 23°C (± 2°C), at ambient pressure condition of 101 kPa.

Epoxy curing agents suitable for use in the present disclosure are compounds which are capable of cross-linking (curing) the epoxy resin. Suitable curing agents according to the present invention may be primary, secondary or even tertiary amines. The epoxy curing agent system present in part (A) comprises two epoxy curing agents, a first epoxy curing agent and a second epoxy curing agent which is distinct (i.e. chemically different) from the first epoxy curing agent.

The first epoxy curing agent for use herein comprises at least one polyether amine and having an amine equivalent weight (AEW) of at least 45 grams per mole of amine equivalents. In that context, the first epoxy curing agent for use herein may be any aliphatic, cycloaliphatic, linear, branched or aromatic polyether amine provided it meets the (AEW) requirement mentioned above.

Without wishing to be bound by theory, it is believed that the first epoxy curing agent comprising at least one polyether amine and having an amine equivalent weight of at least 45 grams per mole of amine equivalents provides fast curing properties to the curable adhesive due its inherent high reactivity, while further providing excellent chemical resistance after curing with the epoxy resin.

In particular aspect, the first epoxy curing agent for use herein may have the general structure: 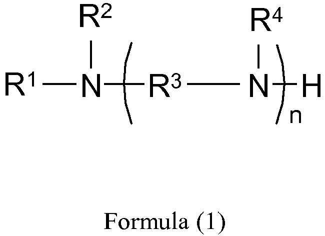 wherein
the residues R¹, R², and R⁴, independently from each other, may represent hydrogen or a hydrocarbon (such as an alkyl) or an alkoxy or a polyoxyalkyl residue containing about 1 to 15 carbon atoms;
R³ represents a polyether alkyl residue, preferably containing about 1 to 15 carbon atoms;
n represents any integer from 1 to 10.

In a preferred aspect, the residues R¹, R², and R⁴ are chosen such that the amine contains at least one or two primary amine groups.

In a particular aspect, the first epoxy curing agent is a polyether amine having one or two or more primary amine moieties. The polyether amine may have from 1 to 12, or even from 1 to 6 catenary ether (oxygen) atoms.

In a preferred aspect, the first epoxy curing agent comprises at least one polyether amine derived from polypropylene oxide or polyethylene oxide. Exemplary polyether amines suitable for use herein are commercially available under the trade designation JEFFAMINE from Huntsman Chemicals, or TTD (4,7,10-trioxatridecane-1,13-diamine) commercially available, for example, from BASF, Ludwigshafen Germany. In a further preferred aspect, an adduct the at least one polyether amine derived from polypropylene oxide or polyethylene oxide with an epoxide resin is used as a first epoxy curing agent. For example, an adduct of TTD with with a commercially available epoxy resin such as Epon 828 may be advantageously used.

According to a particular aspect of the precursor composition of the present disclosure, the first epoxy curing agent for use herein comprises at least one polyether amine having an amine equivalent weight of at least 50 grams per mole of amine equivalents, or even at least 55 grams per mole of amine equivalents.

In a typical aspect, part (A) of the curable precursor composition of the present disclosure comprises from 30 to 90 wt%, from 40 to 85 wt%, or even from 55 to 85 wt% of a first epoxy curing agent comprising at least one polyether amine and having an amine equivalent weight of at least 45 grams per mole of amine equivalents, based on the weight of the part (A).

The precursor composition according to the disclosure comprises in its part (A) a second epoxy curing agent distinct from the first epoxy curing agent or a secondary curative. The second epoxy curing agent for use herein is not particularly limited. Any epoxy curing agent commonly known in the art may be used in the context of the present disclosure provided it is chemically different from the first epoxy curing agent. In that context, the second epoxy curing agent for use herein may be any aliphatic, cycloaliphatic, linear, branched or aromatic amine.

Without wishing to be bound by theory, it is believed that the second epoxy curing agent or the secondary curative provides an acceleration effect to the curing reaction and beneficially impacts the ability to cure at room temperature.

In particular aspect, the second epoxy curing agent for use herein may have the general structure: 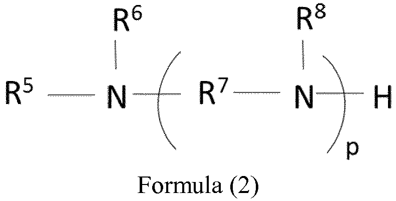 wherein
the residues R⁵, R⁶, and R⁸, independently from each other, may represent hydrogen or a hydrocarbon (such as an alkyl) or an alkoxy or a polyoxyalkyl residue containing about 1 to 15 carbon atoms;
R⁷ represents a hydrocarbon, an alkylether or a polyether alkyl residue, preferably containing about 1 to 15 carbon atoms;
p represents any integer from 1 to 10.

In a particular aspect, the residues R¹, R², and R⁴ are chosen such that the amine contains at least one or two primary amine groups.

According to another particular aspect of the present disclosure, the secondary curative for use herein is selected from the group consisting of imidazoles, imidazole-salts, imidazolines or aromatic tertiary amines including those having the structure of formula (3): 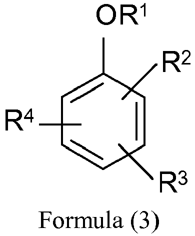 wherein
R¹ is H or alkyl, such as, e.g., methyl or ethyl, preferably methyl;
R² is CH₂-NR⁵R⁶;
R³ and R⁴ may be, independently from each other, present or absent and when present R³ and R⁴ are CH₂-NR⁵R⁶;
R⁵ and R⁶ are, independent from each other, alkyl, preferably CH₃ or CH₂CH₃.

Exemplary secondary curatives for use herein having the structure of formula (3) include tris-2,4,6-(dimethylaminomethyl)phenol commercially available under the trade designation ANCAMINE K54 from Air Products and Chemicals Inc.

According to a particular aspect of the precursor composition of the present disclosure, the second epoxy curing agent for use herein has an amine equivalent weight of at least 50 grams per mole of amine equivalents, at least 100 grams per mole of amine equivalents, at least 150 grams per mole of amine equivalents, at least 200 grams per mole of amine equivalents, or even at least 250 grams per mole of amine equivalents.

In a typical aspect, part (A) of the curable precursor composition of the present disclosure comprises from 1 to 35 wt%, from 5 to 30 wt%, from 7 to 25 wt%, or even from 8 to 20 wt% of a second epoxy curing agent or of a secondary curative, based on the weight of the part (A).

The precursor composition according to the present disclosure comprises in its part (A) a metal nitrate catalyst. The metal nitrate catalyst for use herein is not particularly limited. Any metal nitrate catalyst commonly known in the art may be used in the context of the present disclosure.

Without wishing to be bound by theory, it is believed that the metal nitrate catalyst provides further acceleration effect to the curing reaction and forms a reactive complex with the second epoxy curing agent or the secondary curative beneficially impacting the thixotropic properties of the curable adhesive composition. Accordingly, curing at ambient temperature, together with good mechanical strength of the bond obtained may be achieved.

According to a particular aspect of the present disclosure, the metal salt of the metal nitrate catalyst for use herein is selected from the group consisting of group I metal cations, group II metal cations, and lanthanoid salts.

In a particular aspect, the metal nitrate catalyst for use herein is selected from the group consisting of calcium nitrate, alumina nitrate, magnesium nitrate, lithium nitrate, lanthanum nitrate and any combinations or mixtures thereof. In a preferred aspect, the metal nitrate catalyst is selected from the group consisting of calcium nitrate, magnesium nitrate, and any combinations or mixtures thereof. Preferably, the metal nitrate catalyst for use herein is calcium nitrate. In a particular preferred aspect, the metal nitrate catalyst is calcium nitrate and the secondary curative is a tertiary amine, preferably an aromatic tertiary amine, more preferably an aromatic tertiary amine having the structure of formula (3) of which tris-2,4,6-(dimethylaminomethyl)phenol is particularly preferred.

Part (A) of the curable precursor composition of the present disclosure comprises at least 1.5 wt%, of a metal nitrate catalyst, based on the weight of the part (A).

Part (A) of the curable precursor composition of the present disclosure comprises up to 13 wt% of a metal nitrate catalyst, based on the weight of the part (A).

The precursor composition according to the present disclosure may optionally comprise in its part (A) a metal triflate catalyst. The metal triflate catalyst for use herein is not particularly limited. Any metal triflate catalyst commonly known in the art may be used in the context of the present disclosure.

Without wishing to be bound by theory, it is believed that the metal triflate catalyst provides a further accelerating effect to the curing reaction.

According to a particular aspect of the present disclosure, the metal salt of the metal triflate catalyst for use herein is selected from the group consisting of group I metal cations, group II metal cations, and lanthanoid salts.

In a particular aspect, the metal triflate catalyst for use herein is selected from the group consisting of calcium triflate, magnesium triflate, lithium triflate, lanthanum triflate, and any combinations or mixtures thereof. In a preferred aspect, the metal triflate catalyst is selected from the group consisting of calcium triflate, magnesium triflate, and any combinations or mixtures thereof. Preferably, the metal triflate catalyst for use herein is calcium triflate.

Preferably, part (A) of the curable precursor composition of the present disclosure may optionally comprise an amount of the metal triflate catalyst comprised between 2 and 12 wt%, between 2 and 10 wt%, between 3 and 9 wt%, or even between 4 and 8 wt%, based on the weight of the part (A).

The precursor composition according to the present disclosure comprises in its part (B) a multifunctional first epoxy resin having at least three functional groups and a second epoxy resin distinct from the first epoxy resin. The use of said multifunctional first epoxy resin may have the effect of an improved mechanical stability of the cured composition at higher temperatures, e.g. an improved overlap shear strength at elevated temperatures. Furthermore, the use of said combination of multifunctional first epoxy resin and said second epoxy may further give rise to a favourable combination of mechanical stability of the cured composition such as overlap shear strength at both elevated and low temperatures and adhesive performance during adhesion between adherends that are made of various materials (for example, adhering adherends that are made of materials containing iron, adhering adherends made of materials containing aluminum, or adhering an adherend made of a material containing iron and an adherend made of a material containing aluminum, and the like) due to the contribution of the plurality of functional groups.

Epoxy resins are polymers having one or more epoxy-functionality. Typically but not exclusively, the polymers contain repeating units derived from monomers having an epoxy-functionality but epoxy resins can also include, for example, silicone-based polymers that contain epoxy groups or organic polymer particles coated with or modified with epoxy groups or particles coated with, dispersed in, or modified with epoxy-groups-containing polymers. The epoxy-functionalities allow the resin to undertake cross-linking reactions. The multifunctional first epoxy resins have an average epoxy-functionality of at least 3. The second epoxy resins may have an average epoxy-functionality of 1, greater than one, or of at least 2.

The multifunctional first epoxy resin having at least three functional groups such as a trifunctional epoxy resin can be a single polymer or can be a combination of two or more types of polymers. In a preferred embodiment, the equivalent weight of the trifunctional or higher liquid epoxy is approximately 60 or higher, or approximately 70 or higher, or approximately 80 or higher from the perspective of ease of procurement and reaction properties, and is approximately 1000 or lower, or approximately 500 or lower, or approximately 300 or lower from the perspective of the heat resistance of the cured epoxy adhesive.

Preferred examples of trifunctional epoxy resins used herein include glycidyl amine type epoxy resins, glycidyl phenol type epoxy resins. Examples of glycidyl amine type epoxy resins include triglycidyl aminophenol epoxy compounds, triglycidyl aminocresol epoxy compounds. Examples of glycidyl phenol type epoxy resins include phenol novolac epoxy compounds, triphenyl methane triglycidyl ether compounds. Preferable examples of the triglycidyl aminophenol epoxy compounds include triglycidyl p-aminophenol expressed by the following general formula (4): 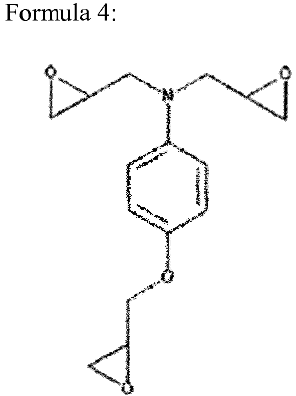 and triglycidyl m-aminophenol expressed by the following general formula (5):

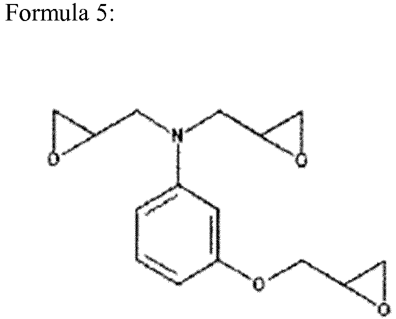

Preferable examples of the triglycidyl aminocresol epoxy compounds include triglycidyl aminocresol expressed by the following formula (6).

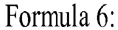

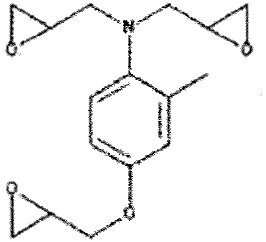

Preferable examples of the triphenyl methane triglycidyl ether compounds include triphenyl methane triglycidyl ether expressed by the following formula (7).

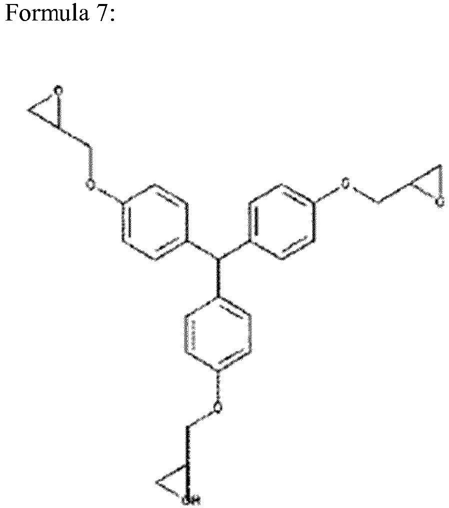

Preferable examples of the tetraglycidyl diaminodiphenyl methane epoxy compounds include the tetraglycidyl diaminodiphenyl methane (4,4'-methylene bis[N,N-bis(oxiranylmethyl) aniline]) expressed by the following formula (8).

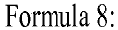

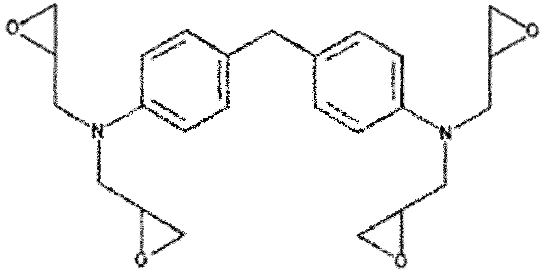

Preferable examples of the tetraglycidyl meta-xylylenediamine epoxy compounds include tetraglycidyl meta-xylylenediamine expressed by the following formula (9).

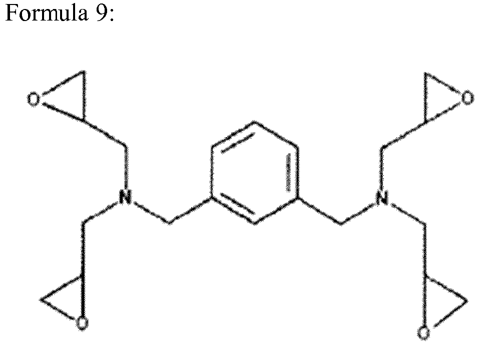

Preferable examples of the tetraglycidyl bisamino methyl cyclohexane epoxy compounds include tetraglycidyl bisamino methyl cyclohexane expressed by the following formula (10).

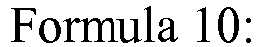

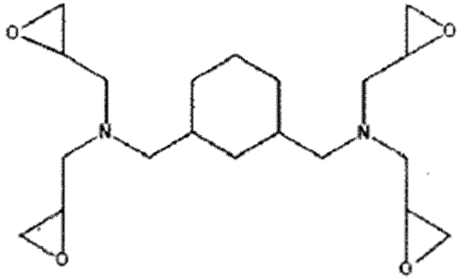

Preferable examples of the tetraglycidyl glycoluril epoxy compounds include tetraglycidyl glycoluril expressed by the following formula (11).

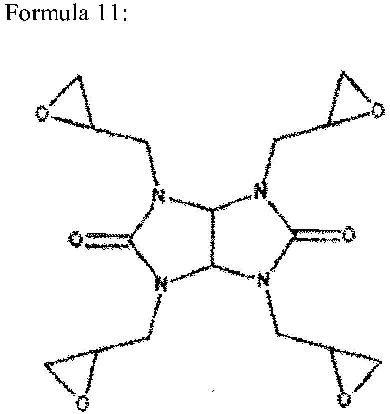

Furthermore, preferable examples of the phenol novolac epoxy compounds include the compounds expressed by the following formula (12): 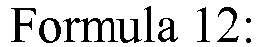 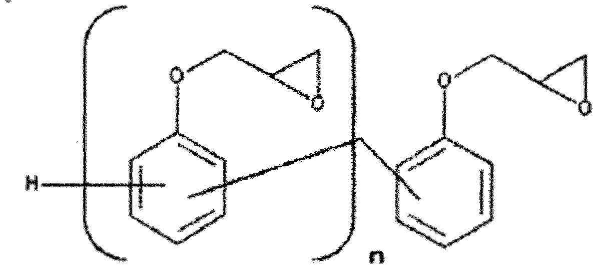 (where n is 2 or higher).

In a preferred embodiment, the multifunctional first epoxy resin includes a trifunctional or higher epoxy resin, preferably a trifunctional epoxy, a tetrafunctional epoxy, or a combination thereof. Furthermore, in a preferred embodiment, the trifunctional or higher liquid epoxy is a trifunctional epoxy, a tetrafunctional epoxy, or a combination thereof. Epoxy resins which may be employed as multifunctional first epoxy resins as described herein are commercially available under the trade designations TACTIX and ARALDITE from Huntsman.

Any epoxy resins well known to those skilled in the art, not included in the multifunctional first epoxy resins, may be used as second epoxy resins in part (B) as described herein. Such epoxy resins may be aromatic, aliphatic, cycloaliphatic or mixtures thereof. In a typical aspect, the epoxy resins for use herein are aromatic. Preferably, the epoxy resins contain moieties of the glycidyl or polyglycidyl ether type. Such moieties may be obtained, for example, by the reaction of a hydroxyl functionality (for example but not limited to dihydric or polyhydric phenols or aliphatic alcohols including polyols) with an epichlorohydrin-functionality. As referred to herein, dihydric phenols are phenols containing at least two hydroxy groups bonded to the aromatic ring (also referred to as "aromatic" hydroxy groups) of a phenol -or in case of polyphenols at least two hydroxy groups are bonded to an aromatic ring. This means the hydroxyl groups can be bonded to the same ring of the polyphenol or to different rings each of the polyphenol. Therefore, the term "dihydric phenols" is not limited to phenols or polyphenols containing two "aromatic" hydroxy groups but also encompasses polyhydric phenols, i.e. compounds having more than two "aromatic" hydroxy groups.

Examples of useful dihydric phenols include resorcinol, catechol, hydroquinone, and polyphenols including p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, 2,2-dihydroxy-1,1-dinaphthylmethane, and the 2,2', 2,3', 2,4', 3,3', 3,4', and 4,4' isomers of dihydroxydiphenylmethane,dihydroxydiphenyldimethylmethane, dihydroxydiphenylethyl methylmethane,dihydroxydiphenylmethylpropylmethane, dihydroxydiphenylethylphenyl-methane, dihydroxydiphenylpropylenphenylmethane, dihydroxydiphenylbutylphenyl-methane, dihydroxydiphenyltolylethane, dihydroxydiphenyltolylmethylmethane, dihydroxydiphenyldicyclohexylmethane, and dihydroxydiphenylcyclohexane.

Preferred second epoxy resins include epoxy resins containing or consisting of glycidyl ethers or polyglycidyl ethers of dihydric or polyhydric phenols, such as for example, but not limited to bisphenol A, bisphenol F and combinations thereof. They contain one or more repeating units derived from bisphenol A and/or F. Such ethers, or such repeating units are obtainable, for example, by a polymerization of glycidyl ethers of bisphenol A and/or F with epichlorohydrin.

Instead of, or in addition to, using the aromatic epoxy resins described above also their fully or partially hydrogenated derivatives (i.e. the corresponding cycloaliphatic compounds) may be used. Instead of, or in addition to using aromatic epoxy resins also aliphatic, for example cyclic or acyclic, linear or branched, epoxy resins may be used.

It is preferred that the multifunctional first epoxy resin is an aromatic multifunctional epoxy resin. This may have the effect of a particular improved mechanical stability such as overlap shear strength at elevated temperatures.

In a further aspect of the present disclosure, it is preferred that the first epoxy resin is selected from the group commonly known to the skilled person as novolac epoxy resins. For example, well-known Novolac compounds are ortho-ortho, ortho-para and para-para methylene bridged phenolic compounds. Examples are the reaction products of phenol and formaldehyde. Novolac epoxy resins may be obtained, e.g. from the reaction of epichlorhydrin and said phenol-formaldehyde novolac compounds. Novolac epoxy compounds generally have multi-epoxy functionalities of greater than 1, greater than 2, or even greater than 3 as defined above. Epoxy novolac resins as described herein may be liquid or semi-solid. Examples of suitable and commercially available novolac epoxy resins are the novolac epoxy resins available from Dow Chemicals, e.g. under the trade designation D.E.N. Using the combination of first and second epoxy resins as described herein may give rise to particularly desirable combination of properties of the cured composition such as high mechanical strengths and favourable adhesive properties such as high overlap shear strength and high peel strength, even at elevated temperatures.

Preferably, the epoxy resins may be liquid at room temperature but also solid epoxy resins, or resin particles may be used or may be used in dissolved form, for example dissolved or dispersed in a solvent or another liquid resin. In a typical aspect, the curable structural adhesive composition of the present disclosure comprises a mixture of liquid and solid epoxy resins,

The epoxy resins may contain halogens, preferably bromine atoms to make them less flammable.

Examples of suitable and commercially available second epoxy resins include diglycidylether of bisphenol A (available under the trade designation EPON 828, EPON 830, EPON 1001 or EPIKOTE 828 from Hexion Specialty Chemicals GmbH, Rosbach, Germany, or under the trade designation D.E.R-331 or D.E.R-332 from Dow Chemical Co,); diglycidyl ether of bisphenol F (e.g. EPICLON 830 available from Dainippon Ink and Chemicals, Inc. or D.E.R.-354 from Dow Chemical Co, Schwalbach/Ts., Germany); diglycidyl ethers of a blend of bisphenol A and bisphenol F (e.g. EPIKOTE 232 available from Momentive Speciality Chemicals, Columbus, USA).

Other epoxy resins based on bisphenols are commercially available under the trade designations EPILOX (Leuna Epilox GmbH, Leuna, Germany); flame retardant epoxy resins are available under the trade designation D.E.R 580 (a brominated bisphenol type epoxy resin available from Dow Chemical Co.).

In a typical aspect, part (B) of the curable precursor composition of the present disclosure comprises from 20 to 60 wt%, from 25 to 55, or even from 25 to 50 wt% of at least one multifunctional first epoxy resin, based on the weight of the part (B) of said precursor composition for a curable adhesive.

In a further typical aspect, part (B) of the curable precursor composition of the present disclosure comprises from 2.5 to 55 wt%, from 5 to 50 wt%, or even from 7.5 to 45 wt% of at least one second epoxy resin distinct from the multifunctional first epoxy resin, based on the weight of the part (B).

The precursor composition according to the present disclosure comprises in its part (B) a filler material. The filler material for use herein is not particularly limited. Any filler material commonly known in the art may be used in the context of the present disclosure.

Without wishing to be bound by theory, it is believed that the presence of a filler material beneficially impacts the rheological properties of the curable adhesive composition and/or may beneficially impact the mechanical strength and give even rise to a cohesive failure mode.

Suitable fillers for use herein include, but are not limited to, particulate fillers, in particular silica particles. Advantageously, the fillers for use herein include amorphous (non-hollow) silica particles, hollow silica particles (hollow glass microspheres), fumed silica, in particular hydrophobically fumed silica, fused silica, silica-gels, calcium silicates, aluminum silicate and any combinations or mixtures thereof. Accordingly, the filler material may comprise only one filler material or a combination of at least two, at least three or even at least four different filler materials.

Exemplary commercial fillers include SHIELDEX AC5 (a synthetic amorphous silica, calcium hydroxide mixture available from W.R. Grace in Columbia, MD, USA); CAB-O-SIL TS 720 (a hydrophobic fumed silica-treated with polydimethyl-siloxane-polymer available from Cabot GmbH in Hanau, Germany); AEROSIL VP-R-2935 (a hydrophobically fumed silica available from Degussa in Dϋsseldorf, Germany); AEROSIL R-202 (a hydrophobically fumed silica available from Evonik Industries, Germany); glass-beads class IV (250-300 microns); Micro-billes de verre 180/300 (available from CVP S.A. in France); MINSIL SF 20 (available from Minco Inc., 510 Midway, Tennessee, USA); amorphous, fused silica; Eurocell 140 (commercially available from Europerl, Austria). Fused silica is available, for example, under the trade designation MINSIL from Minco Inc., Midway, USA. Hollow glass microspheres are available under the trade designation 3M Glass Bubbles from 3M Company, St. Paul, MN, USA.

In an advantageous aspect of the present disclosure, the filler material for use herein is selected from the group consisting of fumed silica, in particular hydrophobically fumed silica, fused silica, amorphous (non-hollow) silica particles, hollow silica particles, and any combinations or mixtures thereof.

According to preferred aspect, the filler material for use herein is selected from the group of fumed silica, in particular hydrophobically or hydrophilically fumed silica, preferably hydrophobically fumed silica.

According to another preferred aspect, part (B) of the curable precursor composition of the present disclosure comprises a filler material comprising fumed silica, in particular hydrophobically fumed silica, in combination with hollow glass microspheres.

In an aspect, part (B) of the curable precursor composition of the present disclosure comprises at least 0.5 wt%, at least 1 wt% or even at least 1.5 wt of a filler material, based on the weight of the part (B).

In another aspect, part (B) of the curable precursor composition of the present disclosure comprises less than 15 wt%, less than 10 wt% or even less than 7 wt% of a filler material, based on the weight of the part (B).

In particular, part (B) of the curable precursor composition of the present disclosure may comprise an amount of filler material comprised between 0.5 and 15 wt%, between 1 and 10 wt% or even between 1.5 and 7 wt% , based on the weight of the part (B).

In another preferred embodiment of the present disclosure, part (A) comprises a filler material as described herein. This may have the effect of still improved overlap shear strength at elevated temperatures. Part (A) may comprise said filler material in an amount in the range of from 1 to 15 wt%, preferably in the range of from 2 to 12 wt%, more preferably in the range of from 3 to 10 wt%.

The precursor composition according to the present disclosure comprises in its part (B) a core-shell polymer toughening agent. The core-shell polymer toughening agent for use herein is not particularly limited. Any core-shell polymer toughening agent commonly known in the art may be used in the context of the present disclosure.

In a typical embodiment, the core-shell toughening agent (B) is a composite material configured by materials where the core portion on the inside and the shell portion on the outside are mutually different. Herein, the term "different materials" refers to materials where the composition and/or properties are mutually different, and therefore includes materials where the same type of resins are used but the molecular weights are mutually different, and the like.

From the perspective of favorably achieving a toughening effect on the epoxy adhesive, the Tg of the shell portion is preferably higher than the Tg of the core portion. In this case, while flexibility is provided to the cured epoxy adhesive because the core portion which has a relatively low Tg functions as a centralized point of stress, the shell portion suppresses unwanted agglomeration of the core-shell toughening agent, and thus the core-shell toughening agent can be uniformly dispersed in the epoxy adhesive.

In the exemplified embodiment, the materials of the core portion and the shell portion can be selected such that the Tg of the core portion is -110°C or higher to -30°C or lower, and the Tg of the shell portion is 0°C or higher to 200°C or lower. In the present disclosure, the Tg of the core portion material and shell portion material is defined as the peak temperature of tanδ during dynamic viscoelasticity measurements.

The core-shell toughening agent can be a conjugate diene such as butadiene, isoprene, 1,3-pentadiene, cyclopentadiene, dicyclopentadiene, or a nonconjugate diene polymer such as 1,4-hexadiene, ethylidene norbornene; copolymers of these conjugate or nonconjugate dienes with an aromatic vinyl compound such as styrene, vinyl toluene, α-methyl styrene, or with an unsaturated nitrile compound such as acrylonitrile, methacrylonitrile, or with a (meth)acrylate such as 2-hydroxyethyl acrylate, 2-hydroxyethyl methacrylate, 3-hydroxybutyl acrylate, glycidyl methacrylate, butoxyethyl methacrylate; acrylic rubber such as polybutyl acrylate; silicone rubber; or a core-shell graft copolymer having a core part that includes a rubber component such as an IPN composite rubber containing silicone and a polyalkyl acrylate, and a shell component formed by copolymerizing a (meth)acrylate ester around the core part. Polybutadiene, a butadiene - styrene copolymer, or an acrylic butadiene rubber - styrene copolymer can be advantageously used as the core portion, and a material formed by graft-copolymerizing methyl (meth)acrylate can be advantageously used as the shell portion. The shell portion can be laminar, or the shell portion can be configured from one layer or a plurality of layers.

Examples of the core-shell toughening agent include methyl methacrylate - butadiene copolymer, methyl methacrylate - butadiene - styrene copolymer, methyl methacrylate - acrylonitrile - butadiene - styrene copolymer, methyl methacrylate - acrylic rubber copolymer, methyl methacrylate - acrylic rubber - styrene copolymer, methyl methacrylate - acrylic butadiene rubber copolymer, methyl methacrylate - acrylic butadiene rubber - styrene copolymer, methyl methacrylate - (acrylic silicone IPN rubber) copolymer, and the like, but are not restricted thereto. Methyl methacrylate - butadiene copolymer, methyl methacrylate - butadiene - styrene copolymer, and methyl methacrylate - acrylic butadiene rubber - styrene copolymer can be advantageously used as the core-shell toughening agent.

The core-shell toughening agent is normally in the form of fine particles, and the average value (weight average particle diameter) of the primary particle diameter thereof is generally 0.05 µm or higher or 0.1 µm or higher to 5 µm or lower or 1 µm or lower. In the present disclosure, the average value of the primary particle diameter of the core-shell toughening agent is determined from a value obtained by zeta potential particle size distribution measurement.

In a preferred embodiment, the core-shell toughening agent can be used in a state dispersed in a matrix. It is preferred that the matrix is an epoxy adhesive. A matrix with favorable affinity to either first or second epoxy resin as described herein is particularly preferable from the perspective of favorable dispersion of the core-shell toughening agent in the epoxy adhesive. Examples of the matrix can include epoxy resins (such as bisphenol A).

The core-shell toughening agent can be a commercial product that is provided as a resin modifying agent or the like, and examples include BTA 751 (commercially available from Dow Chemical) as a methyl methacrylate-butadiene-styrene (MBS) type core-shell resin, MX-153 (a resin where methyl methacrylate-butadiene-styrene (MBS) that is commercially available from Kaneka is dispersed in bisphenol A diglycidyl ether) as the core-shell resin where a resin is dispersed in epoxy, and F351 (commercially available from Aika Industries) as the acrylic core-shell resin, Paraloid 2650A (butadiene rubber), Hycar ATBN (CVC Chemicals, liquid butadiene rubber).

Without wishing to be bound by theory, it is believed that the core-shell polymer toughening agent beneficially impacts, in particular, the low temperature adhesion properties and impact resistance of the curable adhesive composition.

According to a particular aspect of the present disclosure, the core-shell polymer toughening agent for use herein is selected from the group of butadiene based core shell particles. In a preferred aspect of the present disclosure, the core-shell polymer toughening agent may be used in liquid medium, preferably a liquid epoxy resin matrix. For example, a suitable core-shell polymer toughening agent already mixed with a liquid epoxy resin matrix is commercially available under the trade designation Kane Ace from Kaneka.

In a typical aspect, part (B) of the curable precursor composition of the present disclosure comprises an amount of core-shell polymer toughening agent comprised between 2 and 50 wt%, between 5 and 45 wt%, between 7 and 40 wt%, or even between 9 and 35 wt%, based on the weight of the part (B).

In another aspect, also part (A) comprises a core-shell toughening agent. This may have the effect of a still improved mechanical strength and adhesive properties such as improved overlap shear strength even at elevated temperatures. Part (A) may comprise the core-shell toughening agent in an amount in the range of from 1 to 30 wt%, preferably in the range of from 2.5 to 25 wt%, more preferably in the range of from 5 to 20 wt.%.

The precursor composition according to the present disclosure may comprise in its part (B) an epoxy-based reactive diluent. Reactive diluents are epoxy-containing molecules. The epoxy-based reactive diluent for use herein is not particularly limited. Any epoxy-based reactive diluent commonly known in the art may be used in the context of the present disclosure.

Without wishing to be bound by theory, it is believed that the epoxy-based reactive diluent beneficially impacts, in particular, the extrudability characteristics of the curable adhesive composition.

In a particular aspect of the present disclosure, the epoxy-based reactive diluent for use herein has a saturated or unsaturated cyclic backbone, and preferably comprises glycidyl ether as reactive terminal end portions.

According to a preferred aspect, the epoxy-based reactive diluent for use herein is selected from the group consisting of diglycidyl ether of resorcinol, diglycidyl ether of cyclohexane dimethanol, diglycidyl ether of neopentyl glycol, triglycidyl ether of trimethylolpropane, and any mixtures thereof.

Commercially available reactive diluents for use herein include for example "Reactive Diluent 107" (available from Hexion) and the "Epodil" series (available from Air Products and Chemical Inc, Allentown, PA, USA) including in particular EPODIL 746, EPODIL 747, EPODIL 748 and EPODIL 757.

In an aspect, part (B) of the curable precursor composition of the present disclosure comprises an amount of an epoxy-based reactive diluent comprised between 0.1 and 15 wt%, between 1 and 12.5 wt%, between 2 and 10 wt%, or even between 3 and 9 wt%, based on the weight of the part (B).

In a particular aspect, the precursor composition according to the present disclosure comprises:
a) a part (A) comprising:
   i. from 30 to 90 wt%, from 40 to 85 wt%, or even from 55 to 85 wt% of a first epoxy curing agent comprising at least one polyether amine and having an amine equivalent weight of at least 45 grams per mole of amine equivalents, based on the weight of the part (A);
   ii. from 1 to 35 wt%, from 5 to 30 wt%, from 7 to 25 wt%, or even from 8 to 20 wt% of a second epoxy curing agent distinct from the first epoxy curing agent or of a secondary curative, based on the weight of the part (A);
   iii. from 1.5 to 13 wt% of a metal nitrate catalyst, based on the weight of the part (A);
   iv. optionally, from 2 to 12 wt%, from 2 to 10 wt%, from 3 to 9 wt%, or even from 4 to 8 wt% of a metal triflate catalyst, based on the weight of the part (A);
   v. optionally, from 1 to 30 wt%, from 2.5 to 25 wt%, or even from 5 to 20 wt% of a core-shell polymer toughening agent;
   vi. optionally, from 1 to 15 wt%, from 2 to 12 wt%, or even from 3 to 10 wt% of a filler material; and
b) a part (B) comprising:
   i. from 20 to 60 wt%, from 25 to 55 wt%, or even from 25 to 50 wt% of a multifunctional first epoxy resin having at least three functional groups, based on the weight of the part (B);
   ii. from 2.5 to 55 wt%, from 5 to 50 wt% or even from 7.5 to 45 wt% of a second epoxy resin distinct from the first epoxy resin based on the weight of the part (B) ;
   iii. from 0.5 to 15 wt%, from 1 to 10 wt% or even from 1.5 to 7 wt% of a filler material, based on the weight of the part (B);
   iv. from 2 to 50 wt%, from 5 to 45 wt%, from 7 to 40 wt%, or even from 9 to 35 wt%, of a core-shell polymer toughening agent, based on the weight of the part (B); and
   v. optionally, from 10 to 40 wt%, from 15 to 35 wt%, from 15 and 30 wt%, or even from 15 to 25 wt% of an epoxy-based reactive diluent, based on the weight of the part (B).

Advantageously, the curable adhesive precursor composition of the present disclosure provides fast curing performance, including at room temperature. The curing speed performance at room temperature directly translates into the following advantages: increased production rate; faster, less complex and more cost effective adhesive bonding operations as no additional heating step is required.

According to an advantageous aspect, the precursor composition for a curable adhesive of the present disclosure is able to reach the gel point in less than 140 minutes, less than 130 minutes, less than 120 minutes, less than 115 minutes or even less than 110 minutes, when measured by DMA at 23°C according to the test method described in the experimental section.

Advantageously still, the precursor composition for a curable adhesive of the present disclosure provides rapid curing at room temperature whilst preserving advantageous characteristics with respect to work life. In the context of the present disclosure, the expression "work life" is meant to refer to the time during which the curable adhesive precursor composition can still be processed and used in bonding operations after mixing.

In a typical aspect, the curable precursor composition has a work life of at least 5 minutes, at least 8 minutes, at least 10 minutes, at least 12 minutes, or even at least 15 minutes, when measured at 23°C according to the test method described in the experimental section.

Advantageously still, the precursor composition for a curable adhesive of the present disclosure provides excellent thixotropic characteristics whilst preserving advantageous performance with respect to extrudability by hand.

In an advantageous aspect, the curable precursor composition of the present disclosure provides an extrusion rate of at least 1.8 g/min, at least 2 g/min, at least 2.2 g/min, at least 2.4, at least 2.6 g/min, at least 2.8 g/min or even at least 2.9 g/min, when being extruded at a temperature of 23°C according to the test method described in the experimental section.

As such, the curable adhesive precursor composition described herein is particularly suitable for manufacturing operations in construction, automotive, aeronautics or aerospace industries. They are also particularly useful where there is a need for short curing times even at ambient temperatures and high mechanical strength of the obtained bonds, even at elevated temperatures.

The curable adhesive precursor composition of the present disclosure additionally provides excellent mechanical and adhesive properties, including excellent peel strength and shear resistance.

According to an advantageous aspect, the precursor composition for a curable adhesive of the present disclosure which provides an overlap shear strength of 10 MPa in less than 120 minutes, less than 110 minutes, less than 100 minutes, less than 90 minutes, or even less than 80 minutes, when measured at 23°C according to the test method described in the experimental section.

In still another advantageous aspect, the curable precursor composition has a peel strength of at least 100 N/25 mm, at least 110 N/25 mm, or even at least 150 N/25 mm, when measured at 23°C according to the test method described in the experimental section.

In another aspect, the present disclosure relates to a method of bonding an article to a substrate, wherein the method comprises the step of:
a) providing a precursor composition for a curable adhesive as described above;
b) combining part (A) and part (B) so as to form a curable adhesive composition;
c) applying the curable adhesive composition to at least part of the surface of the article and/or to the substrate;
d) adhesively contacting the article to the substrate via the curable adhesive composition; and
e) allowing the curable adhesive composition to cure.

The method of the present disclosure is particularly suitable for bonding small parts that are typically used in manufacturing and repairing operations in construction, automotive, aeronautics or aerospace industries. Exemplary articles typically used in such operations include, but are not limited to, brackets, studs, pins, cable holders, fasteners, hooks, cable ducts, hinges, and any combinations thereof.

In an advantageous aspect of the method of bonding an article to a substrate as described herein, the article is selected from the group consisting of brackets, cable holders, hooks, cable ducts, and any combinations thereof. Advantageously, the article for use herein is a bracket.

Various types of articles may be used in the context of practising the method according to the disclosure. In an advantageous execution, the article for use herein comprises a material selected from the group consisting of thermoplastic polymers, metals, composites, and any combinations or mixtures thereof. According to a preferred execution, the article for use herein comprises a thermoplastic material, in particular acrylonitrile butadiene styrene, polyetherimide, polyamide, and any combinations or mixtures thereof.

Various substrate types typically found in manufacturing and repairing operations in construction, automotive, aeronautics or aerospace industries, may be used in the context of practising the method according to the disclosure. In an advantageous aspect, the surface for use herein comprises a material selected from the group consisting of thermoplastic polymers, metals, composites, and any combinations or mixtures thereof.

Due in particular to their excellent thixotropic characteristics, the curable adhesive precursor compositions of the present disclosure are outstandingly suitable for use in structural bonding applications, in particular for adhesively bonding parts, whereby the small parts such as brackets are adhesively bonded to surfaces which are inclined, vertical or overhead.

Accordingly, and in a particular aspect of the method of bonding an article to a substrate as described herein, the surface is an inclined, vertical or overhead surface. Preferably, the surface is a vertical or overhead surface.

In a typical aspect of the present disclosure, the method of bonding an article to a substrate does not comprise the step of using a supporting fixture for maintaining the bracket during the step of adhesively contacting the article to the substrate via the curable adhesive composition.

According to another aspect, the present disclosure relates to the use of a precursor composition as described above for industrial applications, in particular for manufacturing and repairing operations in construction, automotive, aeronautics or aerospace industries.

According to still another aspect, the present disclosure relates to the use of a curable precursor composition as described above for bonding a bracket to a substrate, in particular a bracket for use in manufacturing and repairing operations in construction, automotive, aeronautics or aerospace industries.

### EXAMPLES

The invention is further illustrated by the following examples. These examples are merely for illustrative purposes only and are not meant to be limiting on the scope of the appended claims.

### Test Methods applied:

### Overlap shear strength (OLS)

OLS is determined according to DIN EN ISO 2243-1 (Aerospace series-non-metallic materials - structural adhesives - test method - part 1: Single lap shear) on 2024-T3 etched CLAD BR 127 primered alumina substrates. The bonding area between those substrates is 125 × 25 mm with a bondline thickness of 90-125 µm. After curing 7 days at room temperature (23°C) and 50 % humidity, the substrate is tested under tensile load with a speed of 2,5 - 10 mm/min. The OLS values are recorded in MPa.

### Peel strength

Peel strength is determined according to DIN EN ISO 2243-2 (Aerospace series- non metallic materials-structural adhesives-test method-part 2: peel metal-metal) on CLAD BR 127 primered alumina substrates. The bonding area is 150 x 25 mm with a bondline thickness of 90-125 µm. After curing 7 days at room temperature (23°C) and 50 % humidity, the substrate is tested under tensile load with a speed of 50 until 150 mm/min.

### Materials employed:

EPIKOTE 232: epoxy resin consisting of a blend of bisphenol A and bisphenol F resin (Momentive Specialty Chemicals Inc.).
TACTIX 742 : trifunctional epoxy resin, AEW of 150-170 g/mol (Huntsmann)
EPON 828: epoxy resin (Hexion Specialty Chemicals GmbH, Rosbach, Germany).
Epikote 828: epoxy resin.
D.E.N. 431: novolac epoxy resin.
Araldite MY 721: Multifunctional epoxy resin.
Epodil 757: Reactive diluent.
Paraloid 2650: Core-shell rubber.
Hycar ATBN: Liquid rubber.
KANE ACE MX-257 (Kaneka, Belgium): butadiene based core/shell polymer (37%wt) dispersed in epoxy resin (diglycidylether of bisphenol A).
TTD: trioxatridecane diamine (BASF).
ANCAMINE K54: Tris-2,4,6-dimethyl amino methylphenol (Air Products and Chemicals, Inc., Allentown/PA/USA).
CALCIUM NITRATE: Ca(NO₃)₂^{∗}4H₂O, available from Sigma Aldrich.

### Preparation of two part epoxy compositions:

### Preparation of Part A

Part A of the precursor composition for a curable adhesive was prepared by combining the ingredients as listed in Table 1 using a high speed mixer (DAC 150 FVZ Speedmixer, from Hauschild Engineering) with stirring at 3000 rpm for at least 2 min to ensure complete dispersion of all ingredients. After all raw materials are added, the mixture is (optionally) degassed and the homogeneous paste was filled into the first unit of a dual pack cartridge (Sulzer Mixpac AG, Haag, Switzerland).

**Table 1: Composition of part A (% by weight).**

| **Part A** | Comp. Ex. 2 | Ex. 1 | Ex. 2 | Ex. 3 |
|---|---|---|---|---|
| TTD / H221 | 60 | 60 | 43,85 | 43,85 |
| Ancamine K54 | 10,5 | 10,5 | 15,62 | 15,62 |
| Epikote 828 | 18,5 | 18,45 | 13,43 | 13,43 |
| Ca(NO3)2 | 11 | 11 | 2,08 | 2,08 |
| Hycar ATBN | 0 | 0 | 10,41 | 10,41 |
| Paraloid 2650 | 0 | 0 | 5,21 | 5,21 |
| Fumed Silica | | | 3,12 | 3,12 |
| Eurocell | 0 | 0 | 6,25 | 6,25 |
| Chromophtal Blue | | 0,05 | 0,02 | 0,02 |

| | | | | |
|---|---|---|---|---|
| ^{∗}The trioxydecane diamine and the bisphenol A epoxy resin are used together as an adduct, i.e. the first epoxy curing agent. | | | | |

### Preparation of Part B

Part B of the precursor composition for a curable adhesive was prepared by combining the ingredients as listed in Table 2 using a high speed mixer (DAC 150 FVZ Speedmixer, from Hauschild Engineering) with stirring at 3000 rpm. In a first step, the liquid components for part B were mixed together for 1 min. Aerosil was added in two steps with mixing for 1 min at 3000 rpm. After all raw materials were added, the mixture was (optionally) degassed and the homogeneous paste was filled into the second unit of a dual pack cartridge (Sulzer Mixpac AG, Haag, Switzerland).

**Table 2: Composition of part B (% by weight).**

| **Part B** | Comp. Ex. 2 | Ex. 1 | Ex. 2 | Ex. 3 |
|---|---|---|---|---|
| Epikote 828 | 72 | 0 | 0 | 0 |
| Epikote 232 | 12 | 7 | 0 | 0 |
| Paraloid EXL 2600 | 12 | 0 | 0 | 0 |
| Kane Ace MX257 | 0 | 45 | 45 | 45 |
| Tactix 742 | 0 | 33 | 0 | 33 |
| Araldite MY 721 | 0 | 0 | 45 | 0 |
| D.E.N 431 | 0 | 10 | 0 | 10 |
| Epoxy Silane | 2 | 2 | 0 | 2 |
| Epodil 757 | 0 | 0 | 5 | 7 |
| Fumed Silica | 2 | 2,95 | 5 | 3 |
| Chromophtal Yellow | 0 | 0,05 | | |

### Examples and Comparative Examples

The dual pack Cartridge was filled with parts B and parts A in a ratio of 2:1 by volume. A mixing nozzle of type MBH 05-16 T (Sulzer Mixpac AG, Haag, Switzerland) was fitted to the cartridge. After a dwell time of 12-24 hours, the adhesive was extruded from the cartridge by using a manual dispensing gun. Curing was done at room temperature (3 h at 23°C). The cured adhesive was tested according to the general procedure given above. As comparative example 1, a commercially available adhesive (Henkel 9394) was used and tested as described.

Test results are shown in Table 3.

**Table 3 Properties of cured epoxy adhesive**

| | Comp. Ex. 1 | Comp. Ex. 2 | Ex. 1 | Ex. 2 | Ex. 3 |
|---|---|---|---|---|---|
| OLS after 3 h at 23°C (MPa) | 0 | 20 | 25 | 10 | 13 |
| OLS at -55 °C (MPa) | 23 | 26 | 31 | 31 | 28 |
| OLS at 23 °C (MPa) | 26 | 32 | 31,5 | 27 | 28 |
| OLS at 80 °C (MPa) | 20 | 8 | 17 | 25 | 17 |
| OLS at 120 °C (MPa) | 13 | 0,5 | 11 | 14 | 11 |
| OLS at 135 °C (MPa) | 6 | 0 | 4 | 6 | 4 |
| Peel Test at RT (MPa) | 20 | 200 | 280 | 100 | 100 |

## Claims

1. A precursor composition for a curable adhesive, said precursor comprising:
a) a part (A) comprising:
i. a first epoxy curing agent comprising at least one polyether amine and having an amine equivalent weight of at least 45 grams per mole of amine equivalents;
ii. a second epoxy curing agent distinct from the first epoxy curing agent or a secondary curative;
iii. from 1.5 to 13 wt.-% of a metal nitrate catalyst, based on the total weight of the part (A);
iv. optionally, a metal triflate catalyst; and
b) a part (B) comprising:
i. at least one multifunctional first epoxy resin having at least three functional groups;
ii. at least one second epoxy resin distinct from the first epoxy resin;
iii. a core-shell polymer toughening agent;
iv. a filler material; and
v. optionally, an epoxy-based reactive diluent; wherein the composition does not comprise norbornane diamine.

2. A precursor composition according to claim 1, wherein the multifunctional first epoxy resin having at least three functional groups is an aromatic and amine-based epoxy resin.

3. A precursor composition according to claim 1 or 2, wherein the second epoxy resin is a phenol-based epoxy resin, selected from a biphenol A epoxy resin, a bisphenol F epoxy resin, a novolac epoxy resin or combinations thereof.

4. A precursor composition according to any of the preceding claims, wherein the first epoxy curing agent comprising at least one polyether amine has an amine equivalent weight of at least 50 grams per mole of amine equivalents, or even at least 55 grams per mole of amine equivalents.

5. A precursor composition according to any of the preceding claims, wherein the first epoxy curing agent comprises at least one polyether amine derived from polypropylene oxide or polyethylene oxide.

6. A precursor composition according to any of the preceding claims, wherein the secondary curative selected from the group consisting of imidazoles, imidazole-salts, imidazolines or aromatic tertiary amines preferably having the structure of formula: 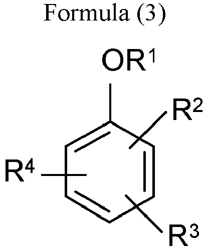 wherein
R¹ is H or alkyl, such as, e.g., methyl or ethyl, preferably methyl;
R² is CH₂-NR⁵R⁶;
R³ and R⁴ may be, independently from each other, present or absent and when present R³ and R⁴ are CH₂-NR⁵R⁶;
R⁵ and R⁶ are, independent from each other, alkyl, preferably CH₃ or CH₂CH₃..

7. A precursor composition according to any of the preceding claims, wherein the metal salt of the metal nitrate catalyst is selected from the group consisting of group I metal cations, group II metal cations, and lanthanoid salts.

8. A precursor composition according to any of the preceding claims, wherein the aromatic multifunctional first epoxy resin having at least three functional groups is selected from glycidyl amine type epoxy resins, preferably triglycidyl aminophenol epoxy compounds, triglycidyl aminocresol epoxy compounds, tetraglycidyl diaminodiphenyl methane epoxy compounds, tetraglycidyl meta-xylylenediamine epoxy compounds, tetraglycidyl bisamino methyl cyclohexane epoxy compounds, tetraglycidyl glycoluril epoxy compounds, and glycidyl phenol type epoxy resins, preferably phenol novolac epoxy compounds and triphenyl methane triglycidyl ether compounds.

9. A precursor composition according to any of the preceding claims, which comprises:
a) a part (A) comprising:
i. from 30 to 90 wt%, from 40 to 85 wt%, or from 55 to 85 wt% of a first epoxy curing agent comprising at least one polyether amine and having an amine equivalent weight of at least 45 grams per mole of amine equivalents, based on the weight of the part (A);
ii. from 1 to 35 wt%, from 5 to 30 wt%, from 7 to 25 wt%, or even from 8 to 20 wt% of a second epoxy curing agent distinct from the first epoxy curing agent or of a secondary curative, based on the weight of the part (A);
iii. from 1.5 to 13 wt% of a metal nitrate catalyst, based on the weight of the part (A);
iv. optionally, from 2 to 12 wt%, from 2 to 10 wt%, from 3 to 9 wt%, or even from 4 to 8 wt% of a metal triflate catalyst, based on the weight of the part (A);
v. optionally, from 1 to 30 wt%, from 2.5 to 25 wt%, or even from 5 to 20 wt% of a core-shell polymer toughening agent;
vi. optionally, from 1 to 15 wt%, from 2 to 12 wt%, or from 3 to 10 wt% of a filler material; and
b) a part (B) comprising:
i. from 20 to 60 wt%, from 25 to 55 wt%, from 25 to 50 wt of an aromatic multifunctional first epoxy resin having at least three functional groups, based on the weight of the part (B);
ii. from 2.5 to 55 wt%, from 5 to 50 wt%, or even from 7.5 to 45 wt% of a second epoxy resin, based on the weight of the part (B);
iii. between 2 and 50 wt%, between 5 and 45 wt%, between 7 and 40 wt%, or even between 9 and 35 wt% of a core-shell polymer toughening agent, based on the weight of the part (B).
iv. from 0.5 to 15 wt%, from 1 to 10 wt%, from 1.5 to 7 wt%, of a filler material, based on the weight of the part (B); and
v. optionally, from 10 to 40 wt%, from 15 to 35 wt%, from 15 and 30 wt%, or even from 15 to 25 wt% of an epoxy-based reactive diluent, based on the weight of the part (B).

10. A method of bonding an article to a substrate, wherein the method comprises the step of:
a) providing a precursor composition for a curable adhesive according to any of claims 1 to 8;
b) combining part (A) and part (B) so as to form a curable adhesive composition;
c) applying the curable adhesive composition to at least part of the surface of the article and/or to the substrate;
d) adhesively contacting the article to the substrate via the curable adhesive composition; and
e) allowing the curable adhesive composition to cure.

11. A method according to claim 10, wherein the article is selected from those for use in manufacturing and repairing operations in construction, automotive, aeronautics or aerospace industries.

12. A method according to any claims 10 or 11, wherein the article and/or the surface comprises a material selected from the group consisting of thermoplastic polymers, metals, composites, and any combinations or mixtures thereof.

13. A method according to any of claims 10 to 12, which does not comprise the step of using a supporting fixture for maintaining the bracket during the step of adhesively contacting the article to the substrate via the curable adhesive composition.

14. Use of a precursor composition according to any of claims 1 to 9 for industrial applications, preferably for manufacturing and repairing operations in construction, automotive, aeronautics or aerospace industries.

15. Use of a precursor composition according to any of claims 1 to 9 for bonding an article to a substrate, preferably a bracket for use in manufacturing and repairing operations in construction, automotive, aeronautics or aerospace industries.

## Patentansprüche

1. Eine Vorläuferzusammensetzung für einen härtbaren Klebstoff, wobei der Vorläufer umfasst:
a) einen Teil (A), umfassend:
i. ein erstes Epoxidhärtungsmittel, umfassend mindestens ein Polyetheramin und mit einem Aminäquivalentgewicht von mindestens 45 Gramm pro Mol Aminäquivalente;
ii. ein zweites Epoxidhärtungsmittel, das sich von dem ersten Epoxidhärtungsmittel unterscheidet, oder ein sekundäres Härtungsmittel;
iii. zu von 1,5 bis 13 Gew.-% einen Metallnitratkatalysator, bezogen auf das Gesamtgewicht des Teils (A);
iv. wahlweise einen Metalltriflatkatalysator; und
b) einen Teil (B), umfassend:
i. mindestens ein multifunktionelles erstes Epoxidharz mit mindestens drei funktionellen Gruppen;
ii. mindestens ein zweites Epoxidharz, das sich von dem ersten Epoxidharz unterscheidet;
iii. einen Kern-Schalen-Polymerelastifikator;
iv. ein Füllmaterial; und
v. wahlweise ein reaktives Verdünnungsmittel auf Epoxidbasis; wobei die Zusammensetzung kein Norbornandiamin umfasst.

2. Eine Vorläuferzusammensetzung nach Anspruch 1, wobei das multifunktionelle erste Epoxidharz mit mindestens drei funktionellen Gruppen ein aromatisches Epoxidharz und Epoxidharz auf Aminbasis ist.

3. Eine Vorläuferzusammensetzung nach Anspruch 1 oder 2, wobei das zweite Epoxidharz ein Epoxidharz auf Phenolbasis ist, ausgewählt aus einem Bisphenol-A-Epoxidharz, einem Bisphenol-F-Epoxidharz, einem Novolak-Epoxidharz oder Kombinationen davon.

4. Eine Vorläuferzusammensetzung nach einem der vorstehenden Ansprüche, wobei das erste Epoxidhärtungsmittel, das mindestens ein Polyetheramin umfasst, ein Aminäquivalentgewicht von mindestens 50 Gramm pro Mol Aminäquivalente oder sogar mindestens 55 Gramm pro Mol Aminäquivalente aufweist.

5. Eine Vorläuferzusammensetzung nach einem der vorstehenden Ansprüche, wobei das erste Epoxidhärtungsmittel mindestens ein Polyetheramin umfasst, das aus Propylenoxid oder Polyethylenoxid gewonnen ist.

6. Eine Vorläuferzusammensetzung nach einem der vorstehenden Ansprüche, wobei das sekundäre Härtungsmittel ausgewählt ist aus der Gruppe bestehend aus Imidazolen, Imidazolsalzen, Imidazolinen oder aromatischen tertiären Aminen, vorzugsweise mit der Struktur der Formel: 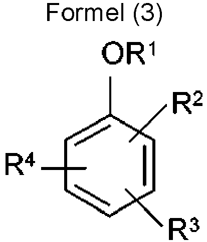 wobei
R¹ H oder Alkyl ist, wie z. B. Methyl oder Ethyl, vorzugsweise Methyl;
R² CH₂-NR⁵R⁶ ist;
R³ und R⁴ unabhängig voneinander vorhanden oder nicht vorhanden sein können, und, wenn vorhanden, R³ und R⁴ CH₂-NR⁵R⁶ sind;
R⁵ und R⁶ unabhängig voneinander Alkyl, vorzugsweise CH₃ oder CH₂CH₃, sind.

7. Eine Vorläuferzusammensetzung nach einem der vorstehenden Ansprüche, wobei das Metallsalz des Metallnitratkatalysators ausgewählt ist aus der Gruppe bestehend aus Gruppe-I-Metallkationen, Gruppe-II-Metallkationen und Lanthanoidsalzen.

8. Eine Vorläuferzusammensetzung nach einem der vorstehenden Ansprüche, wobei das aromatische multifunktionelle erste Epoxidharz mit mindestens drei funktionellen Gruppen ausgewählt ist aus Epoxidharzen vom Glycidylamintyp, vorzugsweise Triglycidylaminophenol-Epoxidverbindungen, Triglycidylaminocresol-Epoxidverbindungen, Tetraglycidyldiaminodiphenylmethan-Epoxidverbindungen, Tetraglycidyl-metaxylylendiamin-Epoxidverbindungen, Tetraglycidylbisaminomethylcyclohexan-Epoxidverbindungen, Tetraglycidylglycoluril-Epoxidverbindungen und Epoxidharzen vom Glycidylphenoltyp, vorzugsweise Phenolnovolak-Epoxidverbindungen und Triphenylmethantriglycidyletherverbindungen.

9. Eine Vorläuferzusammensetzung nach einem der vorstehenden Ansprüche, welche umfasst:
a) einen Teil (A), umfassend:
i. zu von 30 bis 90 Gew.-%, zu von 40 bis 85 Gew.-% oder zu von 55 bis 85 Gew.-% ein erstes Epoxidhärtungsmittel, umfassend mindestens ein Polyetheramin und mit einem Aminäquivalentgewicht von mindestens 45 Gramm pro Mol Aminäquivalente, bezogen auf das Gewicht des Teils (A);
ii. zu von 1 bis 35 Gew.-%, zu von 5 bis 30 Gew.-%, zu von 7 bis 25 Gew.-% oder sogar zu von 8 bis 20 Gew.-% ein zweites Epoxidhärtungsmittel, das sich von dem ersten Epoxidhärtungsmittel unterscheidet, oder ein sekundäres Härtungsmittel, bezogen auf das Gewicht des Teils (A);
iii. zu von 1,5 bis 13 Gew.-% einen Metallnitratkatalysator, bezogen auf das Gesamtgewicht des Teils (A);
iv. wahlweise zu von 2 zu 12 Gew.-%, zu von 2 bis 10 Gew.-%, zu 3 bis 9 Gew.-% oder sogar zu von 4 bis 8 Gew.-% einen Metalltriflatkatalysator, bezogen auf das Gewicht des Teils (A);
v. wahlweise zu von 1 bis 30 Gew.-%, zu von 2,5 bis 25 Gew.-% oder sogar zu von 5 bis 20 Gew.-% einen Kern-Schale-Polymer-Elastifikator;
vi. wahlweise zu von 1 bis 15 Gew.-%, zu von 2 bis 12 Gew.-% oder zu von 3 bis 10 Gew.-% ein Füllmaterial; und
b) einen Teil (B), umfassend:
i. zu von 20 bis 60 Gew.-%, zu von 25 bis 55 Gew.-%, zu von 25 bis 50 Gew.-% ein aromatisches multifunktionelles erstes Epoxidharz mit mindestens drei funktionellen Gruppen, bezogen auf das Gewicht des Teils (B);
ii. zu von 2,5 bis 55 Gew.-%, zu von 5 bis 50 Gew.-% oder sogar zu von 7,5 bis 45 Gew.-% ein zweites Epoxidharz, bezogen auf das Gewicht des Teils (B);
iii. zu zwischen 2 und 50 Gew.-%, zu zwischen 5 und 45 Gew.-%, zu zwischen 7 und 40 Gew.-% oder sogar zu zwischen 9 und 35 Gew.-% einen Kern-Schalen-Polymer-Elastifikator, bezogen auf das Gewicht des Teils (B).
iv. zu von 0,5 bis 15 Gew.-%, zu von 1 bis 10 Gew.-%, zu von 1,5 bis 7 Gew.-% ein Füllmaterial, bezogen auf das Gewicht des Teils (B); und
v. wahlweise zu von 10 bis 40 Gew.-%, zu von 15 bis 35 Gew.-%, zu von 15 bis 30 Gew.-% oder sogar zu von 15 bis 25 Gew.-% ein reaktives Verdünnungsmittel auf Epoxidbasis, bezogen auf das Gewicht des Teils (B).

10. Ein Verfahren zum Binden eines Artikels an ein Substrat, wobei das Verfahren folgenden Schritt umfasst:
a) Bereitstellen einer Vorläuferzusammensetzung für einen härtbaren Klebstoff nach einem der Ansprüche 1 bis 8;
b) Kombinieren von Teil (A) und Teil (B), um eine härtbare Klebstoffzusammensetzung zu bilden;
c) Aufbringen der härtbaren Klebstoffzusammensetzung auf mindesten einen Teil der Oberfläche des Artikels und/oder des Substrats;
d) klebendes Inkontaktbringen des Artikels mit dem Substrat über die härtbare Klebstoffzusammensetzung; und
e) Aushärtenlassen der härtbaren Klebstoffzusammensetzung.

11. Ein Verfahren nach Anspruch 10, wobei der Artikel ausgewählt ist aus solchen zur Verwendung bei Herstellungs- und Reparaturvorgängen in der Bau-, Automobil-, Luftfahrttechnik- oder Luft- und Raumfahrtindustrie.

12. Ein Verfahren nach einem der Ansprüche 10 oder 11, wobei der Artikel und/oder die Oberfläche ein Material umfasst, das ausgewählt ist aus der Gruppe bestehend aus thermoplastischen Polymeren, Metallen, Verbundstoffen und beliebigen Kombinationen oder Mischungen davon.

13. Ein Verfahren nach einem der Ansprüche 10 bis 12, das nicht den Schritt des Verwendens einer Halteeinrichtung zum Halten der Halterung beim Schritt des klebenden Inkontaktbringens des Artikels mit dem Substrat durch die härtbare Klebstoffzusammensetzung umfasst.

14. Verwendung einer Vorläuferzusammensetzung nach einem der Ansprüche 1 bis 9 für industrielle Anwendungen, insbesondere für Herstellungs- und Reparaturvorgänge in der Bau-, Automobil-, Luftfahrttechnik- oder Luft- und Raumfahrtindustrie.

15. Verwendung einer Vorläuferzusammensetzung nach einem der Ansprüche 1 bis 9 zum Binden eines Artikels an ein Substrat, vorzugsweise einer Halterung zur Verwendung in Herstellungs- und Reparaturvorgängen in der Bau-, Automobil-, Luftfahrttechnik- oder Luft- und Raumfahrtindustrie.

## Revendications

1. Composition de précurseur pour un adhésif durcissable, ledit précurseur comprenant :
a) une partie (A) comprenant :
i. un premier agent de durcissement d'époxy comprenant au moins une polyéther-amine et ayant un poids équivalent d'amine d'au moins 45 grammes par mole d'équivalents amine ;
ii. un deuxième agent de durcissement d'époxy distinct du premier agent de durcissement d'époxy ou un durcisseur secondaire ;
iii. de 1,5 à 13 % en poids d'un catalyseur nitrate de métal, sur la base du poids total de la partie (A) ;
iv. facultativement, un catalyseur triflate de métal ; et
b) une partie (B) comprenant :
i. au moins une première résine époxy multifonctionnelle ayant au moins trois groupes fonctionnels ;
ii. au moins une deuxième résine époxy distincte de la première résine époxy ;
iii. un agent de ténacité de type polymère à noyau-enveloppe ;
iv. un matériau de charge ; et
v. facultativement, un diluant réactif à base d'époxy ; dans laquelle la composition ne comprend pas de norbornane diamine.

2. Composition de précurseur selon la revendication 1, dans laquelle la première résine époxy multifonctionnelle ayant au moins trois groupes fonctionnels est une résine époxy aromatique et à base d'amine.

3. Composition de précurseur selon la revendication 1 ou 2, dans laquelle la deuxième résine époxy est une résine époxy à base de phénol, choisie parmi une résine époxy de bisphénol A, une résine époxy de bisphénol F, une résine époxy novolac ou des combinaisons de celles-ci.

4. Composition de précurseur selon l'une quelconque des revendications précédentes, dans laquelle le premier agent de durcissement d'époxy, comprenant au moins une polyéther-amine, a un poids équivalent d'amine d'au moins 50 grammes par mole d'équivalents amine, ou même au moins 55 grammes par mole d'équivalents amine.

5. Composition de précurseur selon l'une quelconque des revendications précédentes, dans laquelle le premier agent de durcissement d'époxy comprend au moins une polyéther-amine dérivée d'oxyde de polypropylène ou d'oxyde de polyéthylène.

6. Composition de précurseur selon l'une quelconque des revendications précédentes, dans laquelle le durcisseur secondaire est choisi dans le groupe constitué d'imidazoles, sels d'imidazole, imidazolines ou amines tertiaires aromatiques ayant de préférence la structure de formule : 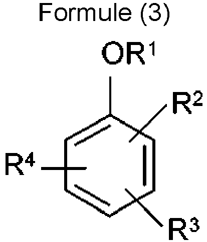 dans laquelle
R¹ est H ou alkyle, tel que, par exemple, méthyle ou éthyle, de préférence méthyle ;
R² est CH₂-NR⁵R⁶ ;
R³ et R⁴ peuvent être, indépendamment l'un de l'autre, présents ou absents et lorsqu'ils sont présents R³ et R⁴ sont CH₂-NR⁵R⁶ ;
R⁵ et R⁶ sont, indépendamment l'un de l'autre, alkyle, de préférence CH₃ ou CH₂CH₃.

7. Composition de précurseur selon l'une quelconque des revendications précédentes, dans laquelle le sel métallique du catalyseur nitrate de métal est choisi dans le groupe constitué de cations métalliques du groupe I, cations métalliques du groupe II et sels de lanthanide.

8. Composition de précurseur selon l'une quelconque des revendications précédentes, dans laquelle la première résine époxy multifonctionnelle aromatique ayant au moins trois groupes fonctionnels est choisie parmi des résines époxy de type amine glycidylique, de préférence des composés triglycidyl-aminophénol-époxy, des composés triglycidyl-aminocrésol-époxy, des composés tétraglycidyl-diaminodiphényl-méthane-époxy, des composés tétraglycidyl-méta-xylylènediamine-époxy, des composés tétraglycidyl-bisamino-méthyl-cyclohexane-époxy, des composés tétraglycidyl-glycoluril-époxy, et des résines époxy de type glycidyl-phénol, de préférence des composés phénol-novolac-époxy et des composés éther triglycidylique de triphényl-méthane.

9. Composition de précurseur selon l'une quelconque des revendications précédentes, qui comprend :
a) une partie (A) comprenant :
i. de 30 à 90 % en poids, de 40 à 85 % en poids, ou de 55 à 85 % en poids d'un premier agent de durcissement d'époxy comprenant au moins une polyéther-amine et ayant un poids équivalent d'amine d'au moins 45 grammes par mole d'équivalents amine, sur la base du poids de la partie (A) ;
ii. de 1 à 35 % en poids, de 5 à 30 % en poids, de 7 à 25 % en poids, ou même de 8 à 20 % en poids d'un deuxième agent de durcissement d'époxy distinct du premier agent de durcissement d'époxy ou d'un durcisseur secondaire, sur la base du poids de la partie (A) ;
iii. de 1,5 à 13 % en poids d'un catalyseur nitrate de métal, sur la base du poids de la partie (A) ;
iv. facultativement, de 2 à 12 % en poids, de 2 à 10 % en poids, de 3 à 9 % en poids, ou même de 4 à 8 % en poids d'un catalyseur triflate de métal, sur la base du poids de la partie (A) ;
v. facultativement, de 1 à 30 % en poids, de 2,5 à 25 % en poids, ou même de 5 à 20 % en poids d'un agent de ténacité de type polymère à noyau-enveloppe ;
vi. facultativement, de 1 à 15 % en poids, de 2 à 12 % en poids, ou de 3 à 10 % en poids d'un matériau de charge ; et
b) une partie (B) comprenant :
i. de 20 à 60 % en poids, de 25 à 55 % en poids, de 25 à 50 % en poids d'une première résine époxy multifonctionnelle aromatique ayant au moins trois groupes fonctionnels, sur la base du poids de la partie (B) ;
ii. de 2,5 à 55 % en poids, de 5 à 50 % en poids, ou même de 7,5 à 45 % en poids d'une deuxième résine époxy, sur la base du poids de la partie (B) ;
iii. entre 2 et 50 % en poids, entre 5 et 45 % en poids, entre 7 et 40 % en poids, ou même entre 9 et 35 % en poids d'un agent de ténacité de type polymère à noyau-enveloppe, sur la base du poids de la partie (B).
iv. de 0,5 à 15 % en poids, de 1 à 10 % en poids, de 1,5 à 7 % en poids, d'un matériau de charge, sur la base du poids de la partie (B) ; et
v. facultativement, de 10 à 40 % en poids, de 15 à 35 % en poids, de 15 et 30 % en poids, ou même de 15 à 25 % en poids d'un diluant réactif à base d'époxy, sur la base du poids de la partie (B).

10. Procédé de liaison d'un article à un substrat, dans lequel le procédé comprend l'étape consistant à :
a) fournir une composition de précurseur pour un adhésif durcissable selon l'une quelconque des revendications 1 à 8 ;
b) combiner la partie (A) et la partie (B) de façon à former une composition adhésive durcissable ;
c) appliquer la composition adhésive durcissable à au moins une partie de la surface de l'article et/ou au substrat ;
d) mettre en contact de manière adhésive l'article au substrat par l'intermédiaire de la composition adhésive durcissable ; et
e) laisser durcir la composition adhésive durcissable.

11. Procédé selon la revendication 10, dans lequel l'article est choisi parmi ceux pour une utilisation dans des opérations de fabrication et de réparation dans les industries de la construction, de l'automobile, de l'aéronautique ou de l'aérospatiale.

12. Procédé selon de quelconques revendications 10 ou 11, dans lequel l'article et/ou la surface comprennent un matériau choisi dans le groupe constitué de polymères thermoplastiques, métaux, composites, et n'importe quelles combinaisons ou n'importe quels mélanges de ceux-ci.

13. Procédé selon l'une quelconque des revendications 10 à 12, qui ne comprend pas l'étape d'utilisation d'un bâti de soutien pour maintenir le support pendant l'étape consistant à mettre en contact de manière adhésive l'article au substrat par l'intermédiaire de la composition adhésive durcissable.

14. Utilisation d'une composition de précurseur selon l'une quelconque des revendications 1 à 9 pour des applications industrielles, de préférence pour des opérations de fabrication et de réparation dans les industries de la construction, de l'automobile, de l'aéronautique ou de l'aérospatiale.

15. Utilisation d'une composition de précurseur selon l'une quelconque des revendications 1 à 9 pour la liaison d'un article à un substrat, de préférence un support pour une utilisation dans des opérations de fabrication et de réparation dans les industries de la construction, de l'automobile, de l'aéronautique ou de l'aérospatiale.
